Europäisches Patentamt

European Patent Office

Office européen des brevets

(19)

(11) Veröffentlichungsnummer: 0 353 195
A1

(12) EUROPÄISCHE PATENTANMELDUNG

(21) Anmeldenummer: 89810561.4

(22) Anmeldetag: 21.07.89

(51) Int. Cl.5: **A 47 J 37/04**
A 47 J 37/07

(30) Priorität: 29.07.88 CH 3003/88

(43) Veröffentlichungstag der Anmeldung:
31.01.90 Patentblatt 90/05

(84) Benannte Vertragsstaaten:
AT BE DE FR GB IT

(71) Anmelder: **Killer, Fritz**
**Frohheimstrasse 2**
**CH-8304 Wallisellen/ZH (CH)**

(72) Erfinder: **Killer, Fritz**
**Frohheimstrasse 2**
**CH-8304 Wallisellen/ZH (CH)**

(54) Gerät mit Wärmereflektormantel und einer vertikal oder horizontal sich kontinuierlich oder mit Intervall drehenden Achse und Tragvorrichtung zum Grillieren, Backen und Kochen von Nahrungsmitteln.

(57) Es wird ein Gerät mit einer um eine vertikale oder horizontale Achse rotierenden Tragvorrichtung (9,10) und mit einer Strahlungsquelle mit im wesentlichen vertikaler Abstrahlungsfläche (5) beschrieben. Um Heizenergie zu sparen, ein besseres Grill- Back- und Kochergebnis zu erzielen und somit den Anwendungsbereich einer solchen Vorrichtung zu erweitern, ist ein ein- oder mehrteiliges, doppelwandiges, innen reflektierendes Gehäuse (12) vorgesehen, welches die Tragvorrichtung (9, 10) mindestens seitlich und oben umschliesst. Es ist innen mit aufgesetzten Reflektorblechen (18, 19) versehen und besteht vorzugsweise aus zwei Flügeln oder als Klappflügel. In einem Kaminschacht (4) ist ein herausnehmbarer, getrennter Glutkorb vorgesehen der wahlweise durch Alternativenergien das heisst im Sinne von Elektro- oder Gasmoduleinheiten ausgetauscht werden kann. Für einen Drehteller (9) und/oder mehrere auf diesem drehbar gelagerte Spiesse (10) odere andere Haltevorrichtungen für das Nahrungsmittelgut, ist ein kontinuierlich oder mit Intervall laufendes Getriebesystem vorgesehen. Beispielsweise bestehend aus Mitnehmern und Mitnehmerstern. Mehrere Gehäuseformen sind gezeigt.

FIG.1

EP 0 353 195 A1

Beschreibung

## Gerät mit Wärmereflektormantel und einer vertikal oder horizontal sich kontinuierlich oder mit Intervall drehenden Achse und Tragvorrichtung zum Grillieren, Backen und Kochen von Nahrungsmitteln.

Die Erfindung betrifft ein Gerät mit einer um eine vertikale bzw. horizontale Achse rotierenden Tragvorrichtung zur Aufnahme des Nahrungsmittelgutes, insbesondere mit Wärmereflektormantel und mit vertikalen oder horizontalen, an einem Ende von einem Drehteller getragenen bzw. gehaltenen Stäben, Spiessen oder Halterungen für Teller, Backbleche, Kochgeschirre,und mit einer Strahlungsquelle mit im wesentlichen austauschbaren Strahlungsquellen (Holzkohle, Elektrisch und Gas) und vertikaler oder horizontaler Abstrahlfläche, die neben bzw. über der Tragvorrichtung angeordnet ist.

Entweder mit Holzkohle, Elektrisch oder mit Gas betriebene Grillgeräte sind bekannt. Trotz des hohen Energiebedarfs, ist bei diesen Geräten und insbesondere bei Betrieb im Freien und bei Luftbewegung und Kälte, eine gleichmässige Garung des Grillgutes nicht immer gewährleistet. Ebenso vermisst man den universellen Anwendungsbereich wie Grillieren, Backen und Kochen und die Austauschbarkeit der Energiequellen. Vor allem aber bei Grillvorrichtungen, die nur von einer Seite her das Grillgut bestrahlen weil sie über keinen Wärmereflektormantel verfügen, fällt der hohe Energiebedarf und die meist relativ lange Grill-, Back- und Kochzeit auf. Die bekannten Grillgeräte sind zudem eine nicht zu unterschätzende Gefahrenquelle in Bezug auf Feuer bei Holzkohleausschüttung durch umfallende Geräte oder Hautverbrennungen bei Berührung.

Der Erfindung liegt die Aufgabe zugrunde, ein Gerät vorzuschlagen, welches besonders wenig Heizenergie erfordert, bei jeder Witterung einzusetzen ist, vielseitig verwendet werden kann und Unfallgefahren weitgehend ausschliesst.

Ausgehend von einem Gerät der einleitend bezeichneten Art, wird diese Aufgabe erfindungsgemäss dadurch gelöst, dass ein mehrteiliges, doppelwandiges, innen reflektierendes Gehäuse vorgesehen ist, welches ausgehend von der Umgrenzung der Strahlungsquelle, die Tragvorrichtung seitlich und oben umschliesst.

Diese Massnahme verhindert nicht nur die Abkühlung des Grill, Back- oder Kochgutes durch Luftkonvektion, sondern infolge der reflektierenden Eigenschaft der inneren Gehäuseoberfläche auch alle Strahlungsverluste. Die von der Strahlungsquelle ausgehende Strahlung wird mehrfach reflektiert und erreicht auch die Rückseite des Nahrungsmittelgutes. Durch die erhöhte Innentemperatur, die derjenigen eines Backofens nahekommt, werden die eingebrachten Speisen vollständig gegart, gebakken oder gekocht und Grillspeisen z.B. erhalten trotzdem eine knusprige Oberfläche. Die reflektierten Wärmestrahlen bewirken zudem rundum der Fleischwaren ein sofortiges Schliessen der Poren und somit ein Minimum an Saftverlust.

Die erwähnte Doppelwandigkeit des Gehäuses wird dadurch erreicht, dass dieses aus einer tragenden Aussenschale und aus an der Innenseite derselben in einem Abstand aufgesetzten Reflektorblechen besteht. Abgesehen von der verhältnismässig einfachen Herstellung eines solchen Gehäuses hat dieses den Vorteil, dass sich die Aussenschale verhältnismässig wenig erwärmt und dadurch Verbrennungen durch Berührung des Gehäuses, insbesondere durch Kinder, ausgeschlossen sind.

Um den Grill- bzw. Backvorgang auch bei geschlossenem Gehäuse beobachten zu können, kann vorzugsweise ein mit einem durchsichtigen Werkstoff geschlossenes oder offenes Sichtfenster vorgesehen werden.

Um das Oeffnen und Schliessen des Gehäuses möglichst einfach zu machen und einen ungestörten Zugang zum Nahrungsmittel gut zu schaffen, wird vorgeschlagen, dass das Gehäuse aus zwei türflügelähnlichen Gehäusehälften besteht, die an den vertikalen Rändern der Frontfläche der Strahlungsquelle angelenkt sind. Derartige Türen haben eine kastenartige Aussenform, innen gewölbte Reflektorbleche und oben eine Partie einer horizontalen Deckfläche. Sie können nicht von selbst auf- oder zufallen und geben das Nahrungsmittelgut von vorne, seitlich und von oben frei. Wahlweise kann das Gehäuse und das Reflektorblech aber auch einteilig oder mehrteilig als Schieber oder Klapptüre ausgebildet werden.

Das Gerät soll wechselweise mit elektrischer Energie, Gas oder auch mit Holzkohle und mit einem äusserst geringen Verbrauch betrieben werden können. Dazu wird vorgeschlagen, dass ein Kaminschacht vorgesehen ist, der die Tragvorrichtung nach unten und oben überragt und ein dieser zugewendetes Fenster aufweist. Ein getrennter Glutkorb, der in den Kaminschacht ebenso einsetzbar ist wie ein elektrisch betriebenes oder ein Gasbrennermodul, befindet sich hinter dem Fenster. Ein solcher Schacht, der wesentlich länger als der die Kohle enthaltende Glutkorb ist, fördert die Zuführung von Verbrennungsluft und somit ein gleichmässiges Abbrennen der Kohle. Vorzugsweise hat der Glutkorb an der Rückseite einen Abstand von der Kaminschachtwand, so dass man sich an ihr ebenfalls nicht verbrennen kann. Ein weiterer Vorteil des Kaminschachts ist die Verhütung der Brandgefahr sowohl bei normalem Betrieb als auch dann, wenn das Gerät einmal umfallen sollte, da glühende Kohlen nicht von starkem Luftzug verweht werden und nicht herausfallen können.

Zweckmässigerweise wird im unteren Bereich des Kaminschachtes ein Aschenkasten angeordnet, der die insbesondere beim Rütteln des Glutkorbes nach unten fallende Asche und die glühenden Kohleteilchen sauber und ungefährlich auffängt. In dieser Hinsicht ist es im übrigen zweckmässig, unterhalb des Kaminschachtfensters ein sich schräg nach oben und zur Tragvorrichtung hin erstreckendes Fangblech anzuordnen, welches die Aufgabe hat, aus dem Frontgitter des Glutkorbes herausfallende Asche in den Kaminschacht zurück und somit in den Aschenkasten zu leiten. Ein dem Glutkorb vorgesetztes, feineres Fanggitter kann zusätzlich zur Verhütung dienen, dass Ascheteilchen auf das Nahrungsmittelgut gelangen. Schliesslich kann der Kaminschacht zur Regelung der Zugluft oben einen Querschieber enthalten, der die Schachtöffnung mehr oder weniger zu schliessen erlaubt.

Ausserdem kann ein Gebläse vorgesehen sein, zu dessen Einsatz eine spezielle Oeffnung im Kaminteil vorgesehen ist. Der Hohlraum zwischen Kaminschacht und Glutkorb dient der Luftzuführung, wobei nach aussen triebene, dächliartige Lochaussparungen, der zwangsweisen Luftzuführung in den Glutkorb dienen. Ein handelsübliches Gebläse kann aufgesteckt oder ein durch Rotationsbewegung Luft erzeugendes Gerät kann am Gerät befestigt werden.

Hinsichtlich der sonstigen Gestaltung des beschriebenen Gerätes wird vorgeschlagen, dass der Kaminschacht und die rotierende Tragvorrichtung an bzw. auf einem tischähnlichen Grundgestell welches mit Rädern auch fahrbar sein kann, angebracht ist, wobei die Verlängerung des Kaminschachts nach unten als Tischbein ausgebildet sein kann. Auf der Tischplatte befindet sich der Drehteller, der von einem an der Unterseite oder seitlich der Tischplatte angebrachten Motor angetrieben wird. Für die Benützung des Gerätes im Freien ist es ausserdem vorteilhaft, ein dachartiges Schutzblech vorzusehen, das vorteilhafterweise oben am Kaminschacht angebracht werden kann und zwar so, dass es auch die Kaminöffnung in einem Abstand abdeckt.

Beim Einsatz dieses Gerätes insbesonders zum Grillieren zeigen sich gegenüber den herkömmlichen Grillgeräten wesentliche Verbesserungen in Bezug auf die Tragvorrichtung zur Nahrungsmittelaufnahme und im besonderen auch im Mechanismus zur Bewegung der vertikal oder horizontal gelagerten und sich drehenden Achse. Es hat sich nämlich gezeigt, dass die mit handelsüblichen Grillspiess-Antriebsmotoren erreichbaren Drehbewegungen ofmals noch zu schnell sind. Es wird deshalb vorgeschlagen, dass der Drehteller und/oder mehrere drehbar gelagerte Spiesse kontinuierlich und/oder mittels wenigstens eines Intervallgetriebes antreibbar sind. Intervallgetriebe sind äusserst einfach und stellen an die Parallelität und Lagerqualität der betroffenen drehbaren Teile nur geringe Anforderungen. So wird zum Beispiel vorgeschlagen, dass mehrere Spiesse, die an ihrem unteren Ende in dem Drehteller gelagert sind, je einen Mitnehmerstern aufweisen, und dass ein feststehender Anschlag mit dem Mitnehmerstern zusammenwirkt. Bei jedem Vorbeigang an dem Anschlag werden die Spiesse somit um einen bestimmten Winkel um ihre eigene Achse gedreht, wodurch das von den Spiessen gehaltene Grillgut bei jedem Vorbeigang an der Strahlungsquelle dieser eine andere Seite zuwendet. Ausserdem wird vorgeschlagen, dass zweckmässigerweise auch der Drehteller selbst kontinuierlich bzw. diskontinuierlich angetrieben werden kann, indem sein Lagerzapfen am unteren bzw. seitlichen Ende einen Mitnehmerstern aufweist und ein Mitnehmer, der vom Motor angetrieben wird und um eine zu dem Lagerzapfen parallele Achse umläuft, mit dem Mitnehmerstern in Eingriff kommt.

Um den beim Erhitzen von Fleisch abtropfenden Bratensaft auffangen und unverschmutzt zur Sossenzubereitung verwenden zu können, wird vorgeschlagen, dass unter dem Drehteller eine ringförmige, ggf. mit einem Ablauf und einem Auffanggefäss versehene Saftrinne angeordnet ist. Dies ist im Prinzip ein am Rand nach oben gewölbter Teller, der in der Mitte ein Loch hat zum Durchtritt des Lagerzapfens des Drehtellers, wobei das Loch einen ebenfalls erhöhten Rand aufweist. Die Saftrinne kann zu einer Stelle hin Gefälle aufweisen und von dort kann der Saft durch eine Tülle welche die Tischplatte durchsetzt, zu einem unter der Platte angeordneten Auffanggefäss abgeleitet werden.

Anstelle von Holzkohlenglut kann das beschriebene Gerät auch mit einer Gasheizung oder mit Elektro-Glühstäben betrieben werden. Diese auf Anschlussschläuche bzw. -kabel angewiesene Strahlungsquellen können anstelle des Holzkohleglutkorbes wie Austauschmodule in den Kamin eingebaut oder in ähnlicher Weise auch in einem horizontal angeordneten Schacht angebracht bzw. eingeschoben oder eingesteckt werden. Mit jeder dieser Strahlungsquellen hat das beschriebene Gerät einen ausserordentlich breiten Anwendungsbereich. Dies gilt zum einen hinsichtlich des Aufstellungsortes wie z.B. in Mehrfamilienhäusern auf Balkone, in Räumen oder im Freien, wo z.B. Rauchimmissionen keine Rolle spielen, wie auch in Bezug auf das zuzubereitende Nahrungsmittel welches von Fall zu Fall einen Grill-, Back-, Koch- oder Dörrvorgang erfordert. Das Gerät kann praktisch auch an jedem Standplatz eingesetzt werden, weil die Aufstellfläche nicht unbedingt feuerfest zu sein braucht und sauber bleibt. Es eignet sich aber auch insbesonders in schwererer Eisenausführung als stationäre Einrichtung auf Residenz-Campingplätzen, Restaurationsbetrieben, in Haus und Garten, wie auch auch in leichterer Eisen- oder Aluminiumausführung als leichter transportables Gerät für den Ausflug und Camping zur Benützung durch wechselnde Personen, da es leicht zu reinigen und ungefährlich ist.

Das beschriebene Gerät eignet sich infolge seiner backofenartig hohen Innentemperaturen über das eigentliche Grillen hinaus auch zum Braten grosser Fleischportionen und zum Backen von Brot und Kuchen. Die vorzugsweise runden Backformen können auf einem Kranz von kürzeren Stäben, die in den Drehteller eingesteckt sind, oder durch eine andere beliebige Haltevorrichtung befestigt werden.

Es ist auch möglich Pizzas zu backen oder mit Stapelgefässen ein Gericht mit mehreren Beilagen zu kochen, was den Einsatzbereich dieses Gerät für die Gebrauchsmöglichkeit auf Baustellen und für Gruppenverpflegung erweitert. Eine weitere Einsatzmöglichkeit als Gerät für das Vorwärmen von Geschirr oder im Einsatz im handwerklichen, industriellen Bereich, liegt auf der Hand. Aehnlich eines Cheminés, kann das Gerät auch als blosse Heizquelle eingesetzt werden, wobei mit der Verstellmöglichkeit des Reflektorgehäuses und mit der dachartigen Abdeckung, die Wärmestrahlen nach belieben gerichtet werden können.

Aus herstellungstechnischen Gründen ist eine eckige Aussenform des Gerätes besonders zweckmässig. Die Einzelmerkmale lassen sich aber auch bei Verwendung anderer Aussenformen verwirklichen. Die Türen können ein- oder mehrflügig wie auch als Klappflügel ausgebildet sein. Entsprechend der Türanordnung sind dann die innenliegenden Reflektorbleche ein- oder mehrteilig. Der Drehmechanismus und insbesonders der Mechanismus für das Erzielen einer Intervalldrehung, kann auch andere Konstruktionsmerkmale aufweisen. Der Antrieb und der Drehteller kann wahlweise unter, über oder seitlich des aufzubereitenden Nahrungsmittel gutes angeordnet sein. Schliesslich kommen für die Konstruktions- und Gehäuseteile die verschiedensten Metalle und Kunststoffe in Betracht. Durch die beschriebene, geringe Erwärmung der Aussenflächen, können diese auch in den verschiedensten Farben lackiert oder emailliert sein.

Zum leichteren Transport wie zum Beispiel im Freizeitbereich (Camping), oder zum Nachrüsten in bestehende Cheminés, kann das Gerät auch andere Konstruktionsmerkmale aufweisen ohne aber aber auf die Vorteile eines Gerätes mit Wärmereflektormantels, des Intervallantriebes und der alternativ einsetzbaren Energiequellen verzichten zu müssen.

Zwei Ausführungsbeispiele der Erfindung werden nachfolgend anhand der Zeichnung erläutert. Im einzelnen zeigt

Fig. 1 eine räumliche Ansicht des geöffneten Gerätes bei abgenommenem Dach,

Fig. 2 eine entsprechende Ansicht bei geschlossenen Türen und aufgesetztem Dach,

Fig. 3 einen Horizontalschnitt III-III der Vorrichtung in halber Höhe,

Fig. 4 eine räumliche Darstellung des Glutkorbes,

Fig. 5 eine Vorderansicht des Kaminschachtes,

Fig. 6 einen Längsschnitt VI-VI,

Fig. 7 einen horizontalen Querschnitt VII-VII des Kaminschachts in größerem Maßstab,

Fig. 8 eine Seitenansicht, zum Teil axial geschnitten, des Drehtellers und seiner Antriebsvorrichtung,

Fig. 9 eine Draufsicht auf ein Bruchstück des Drehtellers,

Fig. 10 eine Seitenansicht einer anderen Ausführungsform des Drehtellerantriebs,

Fig. 11 eine Draufsicht der Anordnung nach Fig. 10,

Fig. 12 eine Seitenansicht einer Grillvorrichtung mit anderer Gehäuseform,

Fig. 13 eine Ansicht der Rückseite,

Fig. 14 eine Draufsicht mit geöffneten Flügeln und

Fig. 15 eine Draufsicht mit geschlossenen Flügeln dieser zweiten Ausführungsform nach Fig. 12.

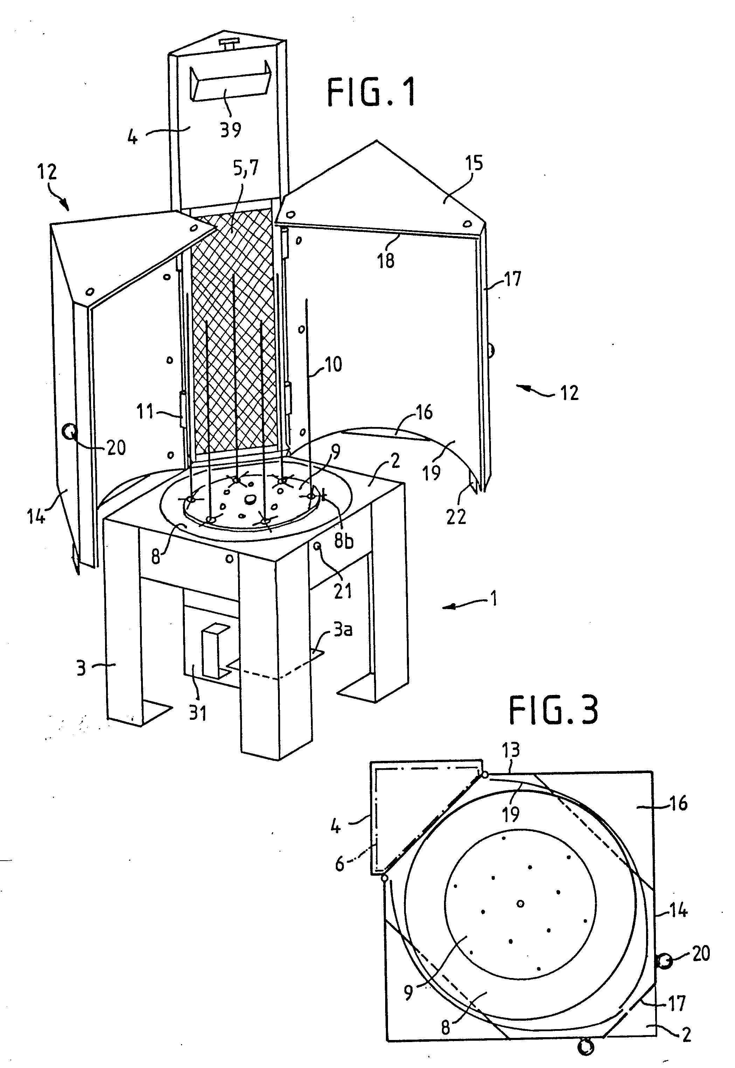

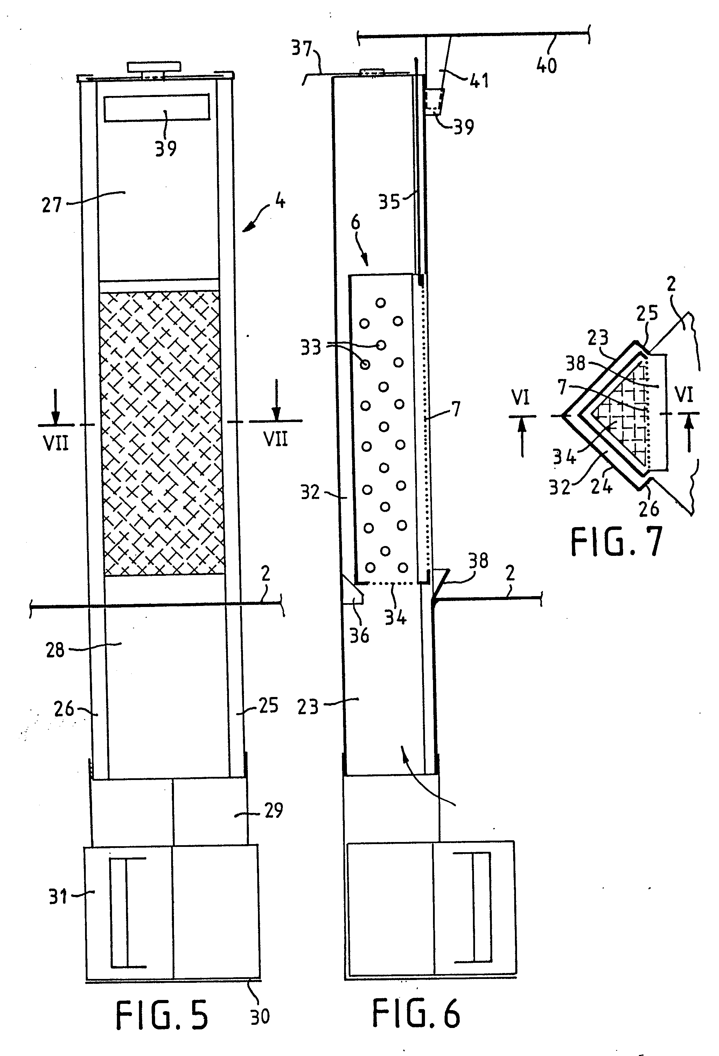

Insbesondere nach Fig. 1 weist die dargestellte, aus Stahlblech gefertigte Grillvorrichtung ein Grundgestell 1 auf, bestehend aus einer quadratischen Tischplatte 2 mit nach unten abgewinkelten Rändern und vier Beinen. Drei dieser Beine 3 haben einen einfachen Winkelquerschnitt, während das vierte den unteren Teil eines Kaminschachts 4 bildet. Unten sind die Beine mit horizontalen Fußplatten versehen. Der im Querschnitt ungefähr dreieckige Kaminschacht 4, der in den Figuren 5 bis 7 für sich dargestellt ist, hat ein der Tischplatte zugewendetes Fenster 5, welches bei eingesetztem Glutkorb 6 von dessen Gitter 7 ausgefüllt wird. In der Mitte der Tischplatte 2 ist ein von einer Saftrinne 8 unterlegter Drehteller 9 gelagert, dessen Antrieb sich unter der Tischplatte befindet. In dem Drehteller 9 stecken mehrere vertikale Spieße 10.

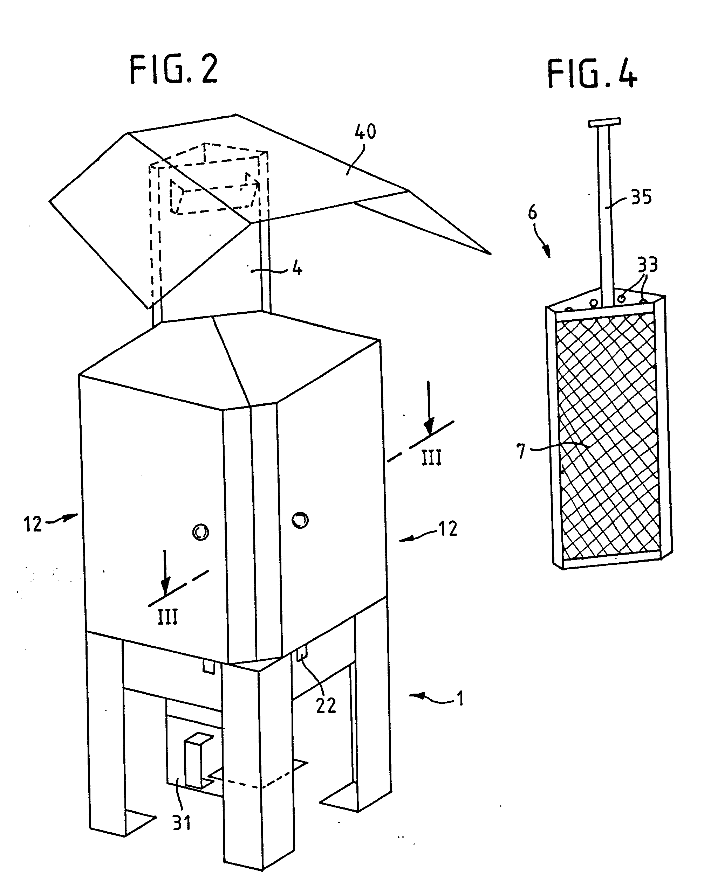

An dem Kaminschacht 4, und zwar zu beiden Seiten des Fensters 5, sind mit Hilfe von je zwei Scharniergelenken 11 zwei Flügel 12 gelagert, welche die beiden Hälften eines Gehäuses darstellen, das im geschlossenen Zustand (Fig. 2) die insbesondere durch den Drehteller 9 und die Spieße 10 gebildete Tragvorrichtung für das Grillgut vollkommen kapselt. Das Gehäuse bzw. die Flügel 12 bestehen, wie auch Fig. 3 zeigt, aus einer Außenschale und einer reflektierenden Innenwand. Die Außenschale eines Flügels besteht aus zwei rechtwinklig zueinanderstehenden Seitenwänden 13 und 14, einer etwa dreieckigen Deckplatte 15 und einer dazu parallelen, etwas kleineren dreieckigen Versteifungsplatte 16 am unteren Rand der Seitenwände 13 und 14. Die Seitenwand 14 hat vorne einen abgekanteten Randstreifen 17, der mit dem entsprechenden Randstreifen des anderen Flügels 12 eine die Vorderkante des gesamten Gehäuses brechende Schrägfläche bildet. Unter der Deckplatte 15 ist mittels kleiner Abstandshalter ein ebenes Reflektorblech 18 aufgedoppelt. Die Seitenwände 13, 14 und 17 sind mit einem gewölbten Reflektorblech 19 ausgeschlagen, das ebenfalls über Abstandshalter an den voneinander abgewandten vertikalen Rändern der Seitenwände 13 und 14 befestigt ist. Die Oberfläche der Reflektorbleche ist vorzugsweise hochglänzend ausgebildet, zum Beispiel durch Verchromung. In dem so gebildeten, querschnittlich etwa ovalen Innenraum wird die von dem Fenster 5 des Kaminschachts ausgehende Strahlung mehrfach reflektiert und dadurch zurückgehalten. Die Versteifungsplatten 16 greifen beim Schließen der Flügel 12 teilweise unter die Saftrinne 8. Sie gleiten dabei über die Tischplatte 2 und tragen zur Abdichtung des Gehäuses bei. Griffknöpfe 20 an den Flügeln 12 und Magnetschnäpper 21, die mit nach unten stehenden Lappen 22 der Flügel zusammenwirken, vereinfachen die Flügelbetätigung bzw. halten diese in der geschlossenen Stellung.

In den Figuren 5 bis 7 ist der Kaminschacht 4 deutlicher dargestellt. Sein Querschnitt (Fig. 7) hat die Form eines gleichschenklig rechtwinkligen Dreiecks mit einem an der Basis angesetzten flachen Trapez. Die Dreieckschenkel bilden die Außenwände 23 und 24 des Kaminschachts 4, während die kurzen Trapezschenkel zu den Außenwänden senkrechte Seitenstreifen 25 und 26 bilden, die über die ganze Länge des Kaminschachts durchlaufen. Die Vorderwand ist dagegen durch das Fenster 5 in einen oberen Vorderwandbereich 27 und einen unteren Vorderwandbereich 28 geteilt. Unten ist der Kaminschacht durch ein Winkelblech 29 mit daran befestigter Fußplatte 30 verlängert. In der Winkelkehle und auf der Fußplatte 30 hat ein mit einem Handgriff versehener Aschenkasten 31 seinen Platz.

Der in Fig. 4 für sich allein dargestellte Glutkorb 6 hat die gleiche Querschnittsform wie der Kaminschacht jedoch etwas kleiner, so daß sich zwischen den Außenwänden von Glutkorb und Schacht ein Strömungsspalt 32 ausbildet (Fig. 7), der es ermöglicht, daß über an den Außenwänden des Glutkorbs 6 angebrachte Löcher 33 Verbrennungsluft auch auf der Rückseite her in den Glutkorb 6 eindringen kann. Die Vorderwand des Glutkorbs wird von einem Gitter aus Streckmetall gebildet, das am oberen und unteren Rand sowie erforderlichenfalls auch in der Mitte durch einen Blechstreifen verstärkt ist. Der Boden besteht ebenfalls aus einem Streckmetallgitter 34. Am oberen Randstreifen des Gitters 7 ist ein Haltestab 35 befestigt, der oben einen Handgriff trägt.

Dieser Glutkorb 6 wird von oben her in den Kaminschacht 4 eingesetzt, wobei das Gitter 7 das Fenster 5 des Kaminschachts vollkommen ausfüllt. Schräge Anschläge 36, die an den Außenwänden 23 und 24 des Kaminschachts befestigt sind (Fig. 6), bestimmen die richtige Höhenlage des Glutkorbs 6 und drängen ihn nach vorn, so daß die Gitterfläche mit der Vorderfläche des Kaminschachts etwa in einer Ebene liegt. Die Luftführung kann mittels eines Schiebers 37 am oberen Ende des Kaminschachts eingestellt werden. Sofern die entstehende Asche nicht durch das Bodengitter 34 des Glutkorbs direkt in den Aschenkasten 31 fällt, tritt sie durch das Gitter 7 aus. Damit diese Asche nicht auf die Tischplatte 2 oder in die Saftrinne 8 fällt, ist am unteren Rand des Kaminschachtfensters ein sich schräg nach oben und außen erstreckendes Fangblech 38 angeordnet (Fig. 6). Dadurch wird auch die vorn austretende Asche in den Aschenkasten 31 geleitet.

Der herausnehmbare Glutkorb 6 läßt sich anfangs sehr einfach und sauber dadurch mit Kohle füllen, daß man ihn in den Kohlensack steckt. Nach Entzündung der Kohlen kann man den Glutkorb 6 zur schnelleren Entfaltung der Glut wie ein Rauchfaß schwenken. Die Asche wird durch Rütteln am Haltestab 35 leicht entfernt. Weitere Kohle kann oben in den Kaminschacht 4 eingeworfen werden. Der Kohleverbrauch ist jedoch äußerst gering. Auch die Entsorgung der Restglut wird durch den getrennten Glutkorb erleichtert.

An dem Vorderwandbereich 27 des Kaminschachts 4 ist ein Haltebügel 39 mit schräger Stegfläche angebracht. Er dient zur Halterung eines Schutzblechs 40, das die Grillvorrichtung wie ein Dach abdeckt, wobei der Kaminschacht oben frei bleibt. Ein an dem Schutzblech befestigtes Keilstück 41 wird von dem Haltebügel 39 formschlüssig umfaßt. Bei gutem Wetter wird das Schutzblech 40 abgenommen.

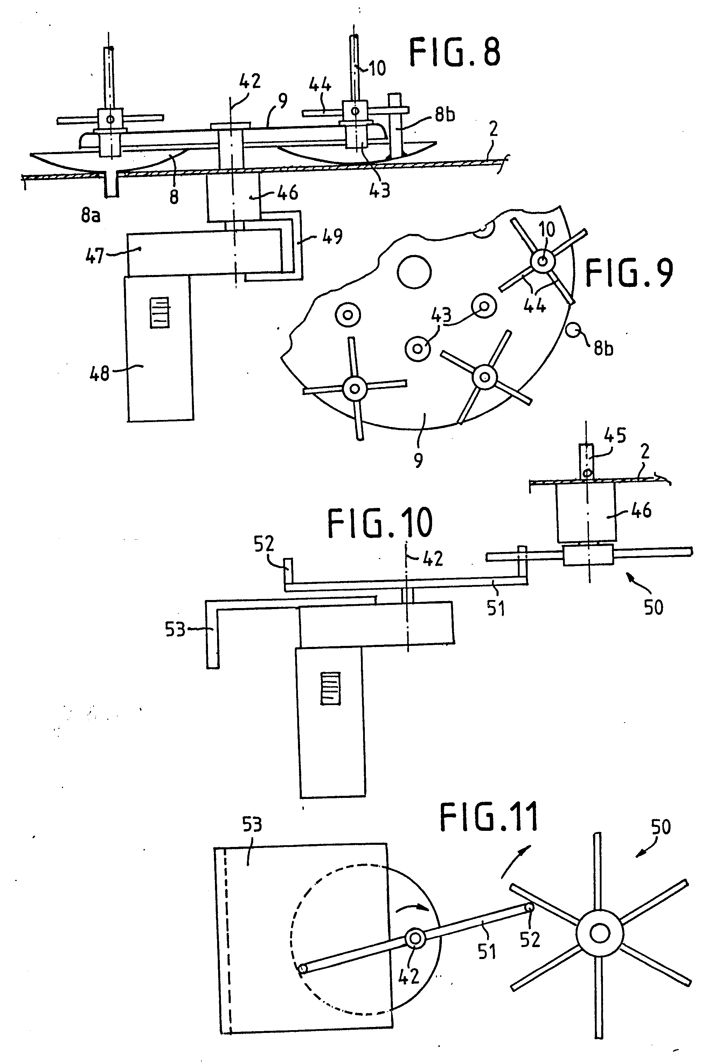

Die Figuren 8 und 9 zeigen, wie die sechs Spieße 10 bei ihrem Umlauf um die Achse 42 des Drehtellers 9 sich zusätzlich in Intervallen um ihre eigene Achse drehen. Die Spieße sind in Lagerhülsen 43 des Drehtellers 9 drehbar aufgenommen und haben im unteren Bereich vier sternförmig radial abstehende Mitnehmerstifte 44. Diese kommen mit einem vertikalen Stift 8b, der an der Saftrinne 8 befestigt ist, oder mit einem anderen festen Anschlag in Eingriff. Außer den sechs Lagerhülsen 43, in denen die Spieße 10 eingesteckt sind, hat der Drehteller einen inneren Kranz von sechs weiteren Lagerhülsen. Wenn die Spieße hier eingesteckt werden, können sie Geflügel oder größere Fleischstücke aufnehmen, wobei auf den Drehantrieb der Spieße verzichtet wird. Der Drehteller 9 ist mit seiner Nabe drehfest auf einen Lagerstift 45 (Fig. 10) aufgesteckt, welcher seinerseits in einer an der Tischplatte 2 befestigten Hülse 46 vorzugsweise mittels Kugellagern gelagert ist. Am überstehenden unteren Ende hat der Lagerstift 45 einen Vierkant, welcher mittels eines üblichen Grillmotors, bestehend aus Getriebe 47 und Motor- bzw. Batteriegehäuse 48, angetrieben wird. Ein Klemmbügel 49 hält den Grillmotor fest.

Fig. 8 zeigt auch die Saftrinne 8 im Schnitt, sowie deren Safttülle 8a, welche die Tischplatte 2 durchsetzt und den Bratensaft nach unten tropfen läßt in ein Auffanggefäß, das auf einer an einem Bein 3 angebrachten Konsole 3a (Fig. 1) aufgestellt sein kann.

In den Figuren 10 und 11 ist eine weitergebildete Antriebsvorrichtung dargestellt, die sich von derjenigen nach den Figuren 8 und 9 dadurch unterscheidet, daß auch der Drehteller 9, der hier in gleicher Weise verwendbar ist, in Intervallen angetrieben wird. Anstelle des Vierkants am unteren Ende trägt der Lagerstift 45 einen Mitnehmerstern 50 mit sechs gleichwinklig verteilten radialen Stiften. Der Grillmotor treibt mittels eines Vierkants um eine ebenfalls vertikale Achse einen zweiarmigen Mitnehmer 51 an, dessen nach oben stehende Treibstifte 52 mit dem Mitnehmerstern in Eingriff kommen. Der Grillmotor ist mittels eines Befestigungswinkels 53 gehalten. Wenn das Abtriebsorgan des Grillmotors wie üblich etwa vier Umdrehungen je Minute macht, entspricht das gemäß diesem letzten Ausführungsbeispiel 1 1/3 Umdrehungen des Drehtellers 9 in der Minute, was sich als äußerst günstig erwiesen hat.

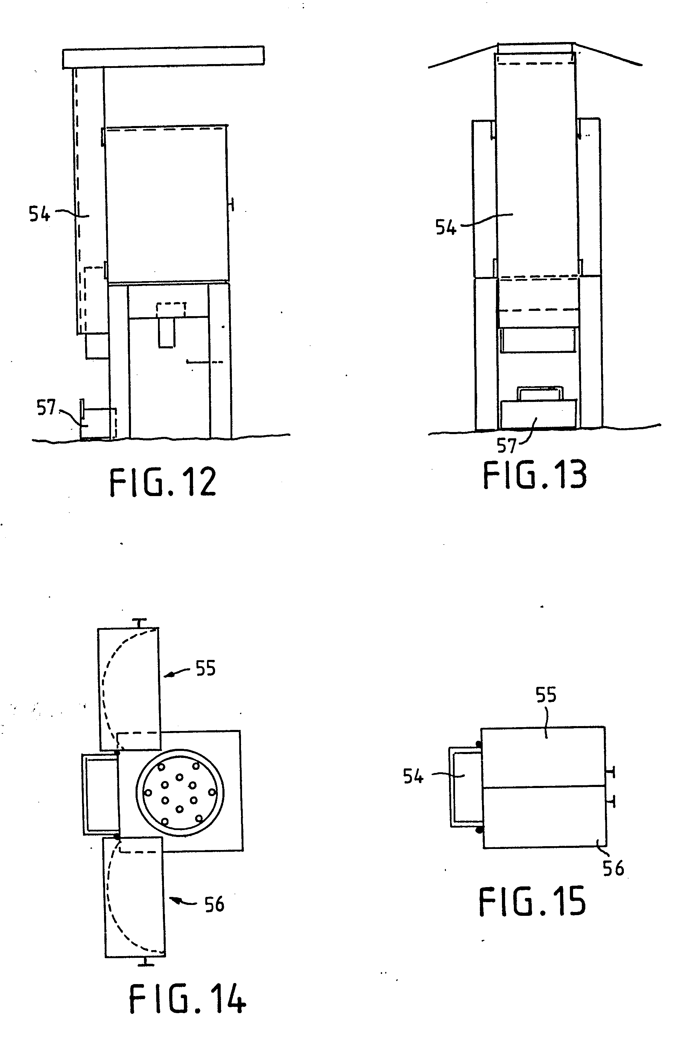

In den Figuren 12 bis 15 ist ein weiteres Ausführungsbeispiel einer Grillvorrichtung in kleinerem Maßstab und in vier Ansichten dargestellt. Bei den Draufsichten nach den Figuren 14 und 15 ist das dachartige Schutzblech abgenommen. Der wesentliche Unterschied gegenüber dem vorhergehenden Beispiel besteht darin, daß der Kaminschacht 54 einen rechteckigen Querschnitt hat und in der Mitte einer Längsseite des Tisches angeordnet ist. Durch die Verbreiterung des Kaminschachts und damit auch des Glutkorbs erhält man eine größere Heizfläche. Die Flügel 55 und 56 haben zueinander rechtwinklige Flächen und sind daher leichter herstellbar. Der Aschenkasten 57 ist ebenfalls größer.

**Patentansprüche**

1. Gerät mit einer um eine vertikale Achse rotierenden Tragvorrichtung für das Nahrungsmittel gut, insbesondere mit vertikalen, an ihren unteren Enden von einem Drehteller getragenen Stäben oder Spiessen, und mit einer Strahlungsquelle mit im wesentlichen vertikaler Abstrahlfläche, die neben der Tragvorrichtung angeordnet ist, dadurch gekennzeichnet, dass ein mehrteiliges, doppelwandiges, innen reflektierendes Gehäuse vorgesehen ist, welches, ausgehend von der Umgrenzung der Strahlungsquelle (7), die Tragvorrichtung (9, 10) seitlich und oben umschliesst.

2. Gerät nach Anspruch 1, dadurch gekennzeichnet, dass das Gehäuse aus zwei türflügelähnlichen Gehäusehälften (12) besteht, die an den vertikalen Rändern der Frontflächen der Strahlungsquelle (7) angelenkt (11) sind.

3. Gerät nach einem der Ansprüche 1 und 2, dadurch gekennzeichnet, dass das Gehäuse aus einer tragenden Aussenschale (13 bis 16) und aus an der Innenseite in einem Abstand aufgesetzten Reflektorblechen (18, 19) besteht.

4. Gerät nach einem der Ansprüche 1 bis 3, dadurch gekennzeichnet, dass ein Kaminschacht (4) vorgesehen ist, der die Tragvorrichtung (9, 10) nach unten und oben überragt und ein dieser zugewendetes Fenster (5) aufweist, und dass die Strahlungsquelle im Fensterbereich in dem Kaminschacht angeordnet ist.

5. Gerät nach einem dar Ansprüche 1 bis 4, dadurch gekennzeichnet, dass ein in den Kaminschacht (4) einsetzbarer, getrenner Glutkorb (6) oder eine wechselweise austauschbare mit elektrischer- oder Gasenergie betriebene Heizquelle vorgesehen ist.

6. Gerät nach einem der Ansprüche 1 bis 5, dadurch gekennzeichnet, dass der Kaminschacht (4) oben einen Querschieber (37) enthält, der je nach Einstellung, die Schachtöffnung mehr oder weniger schliesst.

7. Gerät nach einem der Ansprüche 1 bis 6, dadurch gekennzeichnet, dass am unteren Rand des Fensters (5) des Kaminschachtes (4) ein sich schräg nach oben und aussen erstreckendes Fangblech (38) und unter dem Kaminschacht ein Aschenkasten (31) angeordnet ist.

8. Gerät nach einem der Ansprüche 1 bis 7, dadurch gekennzeichnet, dass der Kaminschacht (4) und die rotierende Tragvorrichtung (9, 10) an bzw. auf einem tischähnlichen Grundgestell (2, 3) angebracht ist.

9. Gerät nach einem der Ansprüche 1 bis 8, dadurch gekennzeichnet, dass am Kaminschacht (4) ein festes, abnehmbares oder umlegbares, dachartiges Schutzblech (40) angeordnet ist.

10. Gerät nach einem der Ansprüche 1 bis 9, dadurch gekennzeichnet, dass ein Drehteller (9) und/oder mehrere drehbar gelagerte Spiesse (10) mittels wenigstens eines kontinuierlich drehendes oder Intervallgetriebes (8b, 44, 50, 51) antreibbar sind.

11. Gerät nach einem der Ansprüche 1 bis 10, dadurch gekennzeichnet, dass mehrere Spiesse (10), die an ihren unteren Enden in dem Drehteller (9) gelagert sind, je einen Mitnehmerstern (44) aufweisen, und dass ein feststehender Anschlag (8b) mit dem Mitnehmerstern zusammenwirkt.

12. Gerät nach einem der Ansprüche 1 bis 11, dadurch gekennzeichnet, dass der Lagerzapfen (45) des Drehtellers (9) an seinem unteren Ende einen Mitnehmerstern (50) aufweist und dass ein motorisch angetriebener Mitnehmer (51), der um eine zu dem Lagerzapfen (45) parallele Achse umläuft, mit dem Mitnehmerstern (50) in Eingriff kommt.

13. Gerät nach einem der Ansprüche 1 bis 12, dadurch gekennzeichnet, dass unter dem Drehteller eine ringförmige, ggf. mit einem Ablauf (8a) versehene Saftrinne (8) angeordnet ist.

14. Gerät nach einem der Ansprüche 1 bis 13, dadurch gekennzeichnet, dass an dem Kaminschacht (4) eine Halterung für ein Gebläse vorgesehen ist.

15. Gerät nach einem der Ansprüche 1 bis 14, dadurch gekennzeichnet, dass der Antrieb, die Achse, die Halterung für das Nahrungsmittel und die Strahlungsquelle in horizontaler Lage angeordnet ist.

16. Gerät nach einem der Ansprüche 1 bis 15, dadurch gekennzeichnet, dass das Gehäuse bzw. der reflektierende Mantel ein- oder mehrteilig, aus einem anderen Material als Metall und als Schieber oder Klappdeckel ausgebildet ist.

FIG.1

FIG.3

EP 0 353 195 A1

FIG.2

FIG.4

40

4

III

12

III

12

22

1

31

6

35

33

7

EP 0 353 195 A1

FIG. 5

FIG. 6

FIG. 7

EP 0 353 195 A1

FIG.8

FIG.9

FIG.10

FIG.11

FIG.12

FIG.13

FIG.14

FIG.15

**Europäisches Patentamt**

**EUROPÄISCHER RECHERCHENBERICHT**

Nummer der Anmeldung

EP    89 81 0561

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-1429829 (BONDANINI)<br>* Seite 3, Zeilen 3 - 18; Figuren 1-4 *<br><br>--- | 1-3, 10,<br>11, 13,<br>16 | A47J37/04<br>A47J37/07 |
| Y | CH-A-262749 (KULL-SCHÄFLI)<br>* das ganze Dokument *<br><br>--- | 1-3, 10,<br>11, 13,<br>16 | |
| A | DE-A-3138171 (ERDMANN)<br>* das ganze Dokument *<br>--- | 4, 8, 15 | |
| A | AU-B-427555 (ZELINGER)<br>* Seite 4, Zeile 14 - Seite 5, Zeile 16; Figur 1 *<br><br>--- | 1, 14 | |
| A | US-A-4512248 (VOLAKAKIS)<br>* das ganze Dokument *<br>----- | 1, 2, 16 | |

RECHERCHIERTE SACHGEBIETE (Int. Cl.5 )

A47J

Der vorliegende Recherchenbericht wurde für alle Patentansprüche erstellt

| Recherchenort | Abschlußdatum der Recherche | Prüfer |
|---|---|---|
| DEN HAAG | 07 NOVEMBER 1989 | MEINDERS H. |